Europäisches Patentamt

European Patent Office

Office européen des brevets

(11) Publication number: **0 371 951**
**A1**

(12) # EUROPEAN PATENT APPLICATION

(21) Application number: **89870194.1**

(51) Int. Cl.⁵: **H05B 3/44, F23Q 7/00**

(22) Date of filing: **28.11.89**

(30) Priority: **28.11.88 ES 8803628**

(43) Date of publication of application:
**06.06.90 Bulletin 90/23**

(84) Designated Contracting States:
**AT BE CH DE ES FR GB GR IT LI LU NL SE**

(71) Applicant: **Moreu Malaret, Antonio**
**Paseo Manuel Girona, 50**
**Barcelona(ES)**

(72) Inventor: **Moreu Malaret, Antonio**
**Paseo Manuel Girona, 50**
**Barcelona(ES)**

(74) Representative: **Schmitz, Yvon et al**
**Bureau Gevers S.A. rue de Livourne 7 bte 1**
**B-1050 Bruxelles(BE)**

(54) **Apparatus for setting fire.**

(57) Apparatus for setting fire essentially characterized in that it is comprised of an electrical heating
resistor (6) lodged with an electrical insulator (7) in a
tubular structure (4) of an elongated two-way configuration and made of a heat conducting material,
one end of said tubular structure being located in a
handle (1) provided with a connecting plug (2) connected with the ends of this resistor.

Fig.1.

EP 0 371 951 A1

## Apparatus for setting fire

The present invention relates to an apparatus for setting fire, more particularly applicable to fireplaces of mantelpieces of buildings and similar, this invention providing a new manner of setting fire in said fireplaces, which is clearer, more convenient and more efficient than the present means used to this end.

As a matter of fact, presently in order to set a fire in the fireplaces of such mantelpieces, it is necessary to use papers or other elements other than wood to be burned and with a very near and inconvenient access to the fireplace. It is also known to use some pellets which in turn must be ignited to set fire to the wood.

The present apparatus allows the material to burn to be set fire from a convenient distance and in a clean way without the unsuitable fumes of the traditional systems for setting fire.

Essentially, the apparatus is comprised of a handle provided at one of its ends with connecting means to the current of the electrical mains, while at its opposite end, which is the operating one, there exists a tubular structure comprising two long tubes united by a 180° curve. Inside said tubes an electrical heating resistor passes, the ends of which are connected to said connecting means, this resistor heating through suitable electrical insulator the tubular structure till such a temperature that when applying the latter between the wood, it sets fire within a few moments.

To make the understanding easier, a sheet of drawings is annexed, which shows by way of example an embodiment of the invention.

Fig. 1 shows a general view of the present apparatus in a partly opened condition and with a particular configuration of its tubes.

Fig. 2 shows a detail at a larger scale of the portion II.

Fig. 3 partially shows the tubular structure with another configuration.

According to these Figures, the apparatus for setting fire wich is the subject of the present invention is comprised of a handle 1 provided at one end with a junction element (more particularly a connecting plug in the example such as shown) for connection of the corresponding cable not shown, to the electrical mains, and of a ring 3 allowing to hang up said apparatus when not in use.

It is essential that from the opposite end of said handle 1, two right tubes 4 start, said tubes being united by a 180° curved portion 5 forming a U-shaped portion. Said tubes 4 are made of a good heat-conducting material and inside said tubes are located a electrical heating resistor 6 which is suitably insulated in 7, the ends of this resistor being connected by wires 8 and through corresponding strips 9 to the connecting plug 2.

It is obvious that in order to receive the electrical current, said resistor 6 (which mainly will concern the free portion 5 of the tubular structure 4) will produce a considerable heat rate which will be transmitted to the tubular structure 4 which will be able to apply said heat inside the wood to ignite by taking naturally the apparatus by the handle 1.

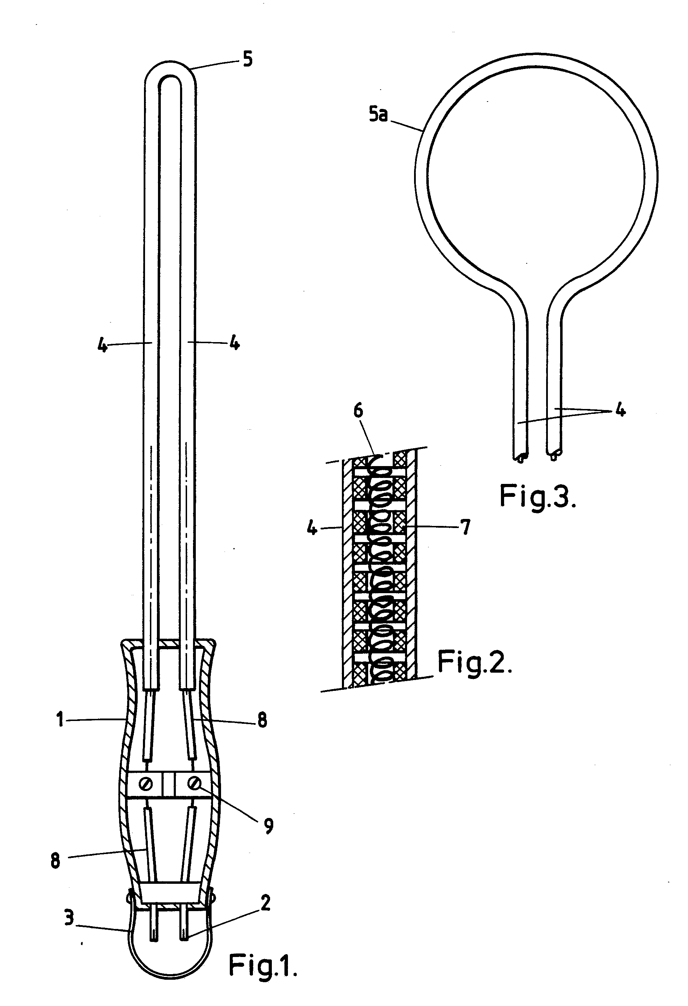

When it is tried to concentrate the heat inside a determined area of the wood, the tubes 4 will have the configuration such as illustrated by Fig. 1 but when it is tried to distribute the heat in a wider manner, the layout of said tubes will have to be wider, such as the circumference 5a shown by Fig 3. All of this is without excluding other possible configurations, for example a polygonal shape.

It has to be understood that this invention is not at all limited to the preceding details because many changes can be brought thereto whithout departing from the present patent.

## Claims

1. Apparatus for setting fire essentially characterized in that it is comprised of an electrical heating resistor (6) lodged with an electrical insulator (7) in a tubular structure (4) of an elongated two-way configuration and made of a heat conducting material, one end of said tubular structure being located in a handle (1) provided with a connecting plug (2) connected with the ends of this resistor.

2. Apparatus according to claim 1, characterized in that said tubular structure (4) has the configuration of a narrow "U".

3. Apparatus according to claim 1, characterized in that said tubular structure (4) has the configuration of a narrow "U", the area where the arms of the latter meet presenting a wide, nearly circumferential broadening (5a).

Fig.1.

Fig.2.

Fig.3.

# EUROPEAN SEARCH REPORT

**European Patent Office**

Application number

| DOCUMENTS CONSIDERED TO BE RELEVANT | | | EP 89870194.1 |

| Category | Citation of document with indication, where appropriate, of relevant passages | Relevant to claim | CLASSIFICATION OF THE APPLICATION (Int. Cl.⁵) |
|---|---|---|---|
| Y | DE - A - 1 526 163 (GENERAL ELECTRIC) * Page 3, last paragraph - page 5, first paragraph; fig. 1-3 * -- | 1,2 | H 05 B 3/44 F 23 Q 7/00 |
| Y | US - A - 2 016 523 (R. STRINGER) * Page 1, lines 32-51; fig. 1,2 * -- | 1,2 | |
| A | GB - A - 675 803 (F.L. BEST) * Fig. 3 * ---- | 1,3 | |

**TECHNICAL FIELDS SEARCHED (Int Cl⁵)**

F 23 Q 7/00
H 05 B 3/00

The present search report has been drawn up for all claims

| Place of search | Date of completion of the search | Examiner |
|---|---|---|
| VIENNA | 27-02-1990 | TSILIDIS |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82